(19) **Europäisches Patentamt**
**European Patent Office**
**Office européen des brevets**

(11) **EP 3 511 266 A1**

(12) **EUROPÄISCHE PATENTANMELDUNG**

(43) Veröffentlichungstag:
**17.07.2019 Patentblatt 2019/29**

(51) Int Cl.:
*B65D 85/804* (2006.01)  *A23F 3/32* (2006.01)
*A23F 5/12* (2006.01)  *A23F 5/14* (2006.01)
*A23F 5/38* (2006.01)  *B65D 65/46* (2006.01)
*A23P 10/30* (2016.01)

(21) Anmeldenummer: **18151614.7**

(22) Anmeldetag: **15.01.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Nickel, Axel**
**30966 Hemmingen (DE)**

(72) Erfinder: **Nickel, Axel**
**30966 Hemmingen (DE)**

(74) Vertreter: **Henkel, Breuer & Partner**
**Patentanwälte**
**Maximiliansplatz 21**
**80333 München (DE)**

(54) **GETRÄNKEPULVER UND FÜLLSTOFF ENTHALTENDE KAPSEL, INSBESONDERE ZUR ZUBEREITUNG VON GEBRÜHTEM KAFFEE**

(57) Eine Kapsel, insbesondere zur Zubereitung eines Getränkes aus Getränkepulver, insbesondere von Kaffee aus Kaffeemehl, durch Einbringen von Wasser in die Kapsel, umfasst einen Pressling aus einer Pulvermischung, wobei der Pressling mit wenigstens einer ein vernetztes Polysaccharid umfassenden Beschichtungsschicht ummantelt ist, wobei die Pulvermischung des Presslings i) ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff mit einer von der ersten Partikelgröße A verschiedenen oder zu der ersten Partikelgröße A gleichen Partikelgröße C enthält.

EP 3 511 266 A1

**Beschreibung**

Die vorliegende Erfindung betrifft eine Getränkepulver enthaltende Kapsel, welche insbesondere für die Zubereitung eines Getränkes, wie Kakao, Tee oder Kaffee, geeignet ist. Zudem betrifft die vorliegende Erfindung ein Verfahren zur Einstellung des Durchströmwiderstandes einer solchen Kapsel, ein Verfahren zur Herstellung einer solchen Kapsel sowie die Verwendung einer solchen Kapsel.

Bei der portionsweisen Zubereitung von Getränken, insbesondere von gebrühtem Kaffee, wurden in den vergangenen Jahren neben Kaffeepads zunehmend Kaffeekapseln verwendet, deren Kapselwände üblicherweise aus Edelstahl, Aluminium oder Kunststoff gefertigt sind. Solche Kapseln erlauben es, Kaffeemehl über einen längeren Zeitraum ohne Aromaverlust zu lagern. Zudem erlauben solche Kapseln eine schnelle und bedienerfreundliche Herstellung einer Kaffeeportion mit gewünschter Geschmacksrichtung, indem eine Kapsel mit gewünschter Kaffeesorte in eine daran angepasste Kaffeemaschine eingesetzt wird, in welcher dann heißes Wasser durch die Kapsel gepresst und daraus gebrühter Kaffee hergestellt wird. Allerdings sind derartige Kapseln unter anderem aufgrund des eingesetzten Kapselmaterials sowie der produktionsaufwendigen Kapselkonstruktion vergleichsweise teuer. Ferner sind derartige Kapseln umweltpolitisch problematisch. Zum einen sind die Kapseln nicht wiederverwertbar und werden vom Verbraucher nach dem Gebrauch in der Regel als Restmüll entsorgt. Ein Recycling von Kaffeekapseln findet daher praktisch nicht statt, was insbesondere bei Kaffeekapseln auf Aluminiumbasis bedenklich ist, da die Aluminiumherstellung sehr energieintensiv ist, wodurch sich bei solchen Kapseln eine besonders schlechte $CO_2$-Bilanz ergibt.

Ein weiterer großer Nachteil ist, dass derartige Kapseln biologisch nicht abbaubar sind und somit auch nicht biologisch entsorgt werden können. In Anbetracht der Tatsache, dass allein in Deutschland pro Jahr weit über 4 Milliarden Kaffeekapseln und weltweit über 48 Milliarden Kaffeekapseln verbraucht werden, ist dies ein ernstzunehmendes Problem.

Um die vorstehenden Probleme zumindest teilweise zu umgehen, sind bereits Kapseln aus alternativen Materialien vorgeschlagen worden.

Aus der DE 10 2014 000 187 A1 ist eine Kapsel bekannt, welche aus einem Pressling aus einem cellulosischem Pulver, wie insbesondere aus Kaffeemehl besteht, wobei der Pressling mit einer aus einem biologisch abbaubaren Material bestehenden Material zusammengesetzten Schicht ummantelt ist. Bei der Ummantelungsschicht handelt es sich bevorzugt um eine Flüssigcellulose, die aus einem Polysaccharid oder einem Derivat davon in Verbindung mit einem polyolen Spacer und dem zugehörigem Vernetzer besteht.

In der 3 115 316 A1 wird eine Kapsel, insbesondere zur Zubereitung eines Getränkes aus Getränkepulver, insbesondere von Kaffee aus Kaffeemehl, durch Einbringen von Wasser in die Kapsel, offenbart, wobei die Kapsel einen Pressling aus einem wenigstens ein Polysaccharid enthaltendem Pulver umfasst, wobei der Pressling mit wenigstens einer Beschichtungsschicht ummantelt ist, wobei die wenigstens eine Beschichtungsschicht ein vernetztes Polysaccharid umfasst, wobei das vernetzte Polysaccharid durch Vernetzen eines Polysaccharids mit einem Vernetzungsmittel ohne die Verwendung eines polyolen Abstandshalters erhalten wurde.

Diese Kapseln sind biologisch abbaubar und somit umweltschonend. Allerdings ist es bei diesen Kapseln schwierig, den Durchströmwiderstand und somit die Extraktionseigenschaften mit heißem Wasser auf einen gewünschten Wert einzustellen.

Um die zuvor beschriebenen Kapseln mit einem an diese angepassten Kaffeevollautomaten zu trinkfertigem Kaffee zu verarbeiten, müssen diese Kapseln eine standardisierte Größe aufweisen. Zudem sollten diese einen definierten Durchströmwiderstand aufweisen, damit der Kaffee in dem Kaffeevollautomaten mit jeweils demselben Wasserdruck für dieselbe Zeit aus den Kapseln extrahiert werden kann. Beispielsweise sollte die Extraktionsdauer bei einem Wasserdruck von 9 bar nicht über 25 s liegen. Allerdings hängt der Durchströmwiderstand solcher Kapseln von einer Vielzahl von verschiedenen Faktoren ab, wie insbesondere von dem Mahlgrad, dem Pressdruck, mit denen die Kapseln hergestellt worden sind, und anderen Faktoren. Je feiner der Mahlgrad des Pulvers ist, desto geringer ist die Porosität der daraus hergestellten Kapsel, da zwischen kleineren Partikeln weniger Hohlräume verbleiben als zwischen größeren Partikeln. Unterschiedliche Kaffeesorten erfordern jedoch auch einen unterschiedlichen Mahlgrad, um Kaffee mit exzellentem Geschmack zu ergeben. Espresso beispielsweise ist feinkörniger zu verwenden als Filterkaffee. Aus diesem Grund ist es schwierig, die vorstehend beschriebenen Kapseln unabhängig von der Kaffeesorte mit einem Kaffeevollautomaten zu trinkfertigen Kaffee mit einer definierten Kaffeekonzentration zu verarbeiten.

Ausgehend davon liegt der vorliegenden Erfindung die Aufgabe zugrunde, eine Kapsel für die portionsweise Zubereitung von Getränken aus Getränkepulver, wie Kakao, Tee und Kaffee, bereit zu stellen, welche nicht nur einfach und kostengünstig herstellbar, biologisch abbaubar und daher umweltfreundlich zu entsorgen ist, den Kapselinhalt auch über einen längeren Zeitraum ohne nennenswerten Aromaverlust lagert, sondern welche insbesondere einfach auf einen definierten Durchströmwiderstand eingestellt werden kann.

Erfindungsgemäß wird diese Aufgabe gelöst durch eine Kapsel, insbesondere zur Zubereitung eines Getränkes aus Getränkepulver, insbesondere von Kaffee aus Kaffeemehl, durch Einbringen von Wasser in die Kapsel, wobei die Kapsel einen Pressling aus einer Pulvermischung umfasst und der Pressling mit wenigstens einer ein vernetztes Polysaccharid umfassenden Beschichtungsschicht ummantelt ist, wobei die Pulvermischung des Presslings i) ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff, vorzugsweise einen inerten Füllstoff, mit einer von der ersten Partikelgröße A verschiedenen oder zu der ersten Partikelgröße A gleichen Partikelgröße C enthält.

Diese Lösung basiert auf der Erkenntnis, dass durch das Einmischen in eine Pulvermischung enthaltend ein Polysaccharid umfassendes Pulver mit einer ersten Partikelgröße A von einer geeigneten Menge eines Polysaccharid umfassenden Pulvers mit einer geeigneten, von der ersten Partikelgröße A verschiedenen zweiten Partikelgröße B und/oder eines Füllstoffs, vorzugsweise eines inerten Füllstoffs, mit einer geeigneten, von der ersten Partikelgröße A verschiedenen oder mit der ersten Partikelgröße A gleichen Partikelgröße C sowie durch anschließendes Verpressen der Pulvermischung mit einem geeigneten Pressdruck, die Durchströmeigenschaften des Presslings derart eingestellt werden können, dass die daraus hergestellte Kapsel unabhängig von der Sorte und dem Mahlgrad des eingesetzten Polysaccharids, insbesondere unabhängig von der eingesetzten Kaffeesorte und des Kaffeemahlgrades einen wählbaren Durchströmwiderstand aufweist. Aus diesem Grund können die erfindungsgemäßen Kapseln unabhängig von der eingesetzten Kaffeesorte und des Kaffeemahlgrades mit einem Kaffeevollautomaten zu trinkfertigem Kaffee mit exzellenter und gleichbleibender Qualität verarbeitet werden, da die Extraktionszeit der erfindungsgemäßen Kapseln unabhängig von der eingesetzten Kaffeesorte und des Kaffeemahlgrades für heißes Wasser gleich ist. Folglich eignen sich die erfindungsgemäßen Kapseln insbesondere auch für Kaffeemehl mit feinem oder gar sehr feinem Mahlgrad, der aufgrund seiner große Oberfläche eine gute Extraktion bewirkt, aber wegen der kleinen Kapillaren zwischen den feinen Pulverkörnern ohne Beimischung der zweiten Komponente ii) einen zu hohen Durchströmwiderstand aufweisen würde. Mithin wird durch die Beimischung der zweiten Komponente ii) ein Freiheitsgrad für die Formulierung der Pulvermischung eingeführt, was zu einer zumindest teilweisen Entkoppelung der anderen sonst voneinander abhängigen Parameter, nämlich Mahlgrad, Dichte, Gewicht des Presslings, Volumen des Presslings sowie Kaffeesorte, führt. Da die erfindungsgemäßen Kapseln aus einem mit wenigstens einer ein vernetztes Polysaccharid umfassenden Beschichtungsschicht ummantelten Pressling bestehen, sind die Kapseln zudem umweltfreundlich entsorgbar. Insbesondere ist die wenigstens eine Beschichtungsschicht aus einem vernetzten Polysaccharid stabil genug, um die Kapsel mit einem ausreichend hohen Transportschutz und Anfassschutz zu versehen. Abgesehen davon schützt die erfindungsgemäße Kapsel den Kapselinhalt auch über einen längeren Zeitraum, ohne dass ein nennenswerter Aromaverlust auftritt. Durch das Pressen des Kaffeemehls zu einem Pressling wird nämlich die Oberfläche des Kaffeemehls, welche für Sauerstoff zugänglich ist, im Vergleich zu unverdichtetem Mehl deutlich verringert. Außerdem ist die erfindungsgemäße Kapsel leicht in Kugelform herstellbar und eignet sich somit hervorragend zur Verwendung in einem entsprechend angepassten Getränkeautomaten, da sie rollen kann.

Erfindungsgemäß enthält die erfindungsgemäße Kapsel einen Pressling, der aus einer Pulvermischung zusammengesetzt ist, wobei die Pulvermischung des Presslings i) ein Polysaccharid umfassendes Pulver, besonders bevorzugt Kaffeemehl, mit einer ersten Partikelgröße A und ii) a) ein Polysaccharid umfassendes Pulver, besonders bevorzugt Kaffeemehl, mit einer von der ersten Partikelgröße A verschiedenen zweiten Partikelgröße B und/oder b) einen Füllstoff, vorzugsweise einen inerten Füllstoff, mit einer von der ersten Partikelgröße A verschiedenen oder zu der ersten Partikelgröße A gleichen Partikelgröße C enthält. Dabei ist es besonders bevorzugt, dass die Pulvermischung des Presslings zusätzlich zu dem Polysaccharid umfassenden Pulver mit der ersten Partikelgröße A einen Füllstoff, vorzugsweise einen inerten Füllstoff, mit einer von der ersten Partikelgröße A verschiedenen oder zu der ersten Partikelgröße A gleichen Partikelgröße C enthält.

Unter einem inerten Füllstoff wird im Sinne der vorliegenden Erfindung ein pulverförmiges Material verstanden, welches ein zugelassenes Lebensmittel oder ein zugelassener Lebensmittelzusatzstoff ist und vorzugsweise zudem lagerstabil, geruchsneutral sowie geschmacksneutral ist.

Zudem wird unter Partikelgröße im Sinne der vorliegenden Erfindung die mittlere Partikelgröße $d_{50}$ verstanden, also der Wert für den Durchmesser, der von 50% der vorliegenden Partikel unterschritten wird.

Zur besseren Beschreibung der Wirkzusammenhänge werden nachfolgend einige mathematisch - physikalische Zusammenhänge betrachtet.

Bei Extraktionsvorgängen für Heißgetränke, wie z.B. bei der Espressozubereitung, handelt es sich in der Regel um ein einphasiges Durchströmen eines porösen Körpers, der z.B. ein Presskuchen aus Kaffeemehl sein kann, mit einem Fluid, z.B. Wasser mit festgelegten Eigenschaften. Dieser Presskuchen wird auch als Haufwerk bezeichnet, da er aus einer Schüttung von Partikeln besteht. Solche Haufwerke lassen sich exakt beschreiben, solange sie sich aus einer Schüttung kugelförmiger Partikel zusammensetzen. Beschreibende Parameter sind der Durchmesser $d_P$, der Lückengrad bzw. die Porosität $\varepsilon$ und der Kapillardurchmesser $d_K$. So ergibt sich z.B. für die dichteste Kugelpackung eine Porosität von ca. 26% (Keppler'sche Vermutung). Setzt sich das Haufwerk aus Partikeln mit unterschiedlichen Durchmessern zusammen oder handelt es sich nicht um Kugeln, ist eine exakte Beschreibung nicht mehr möglich und es muss entweder auf experimentelle Daten, statistische Methoden oder numerische Simulationsverfahren zurückgegriffen werden. Die wirksame (äußere) Porosität $\varepsilon$ wird nach der Formel

$$\varepsilon = (V_S - V_P)/V_S \qquad (1)$$

berechnet, wobei $V_S$ das Schüttvolumen und $V_P$ das Partikelvolumen darstellt. Die Berechnung aus der Schüttdichte und der Partikeldichte ist nur zulässig, solange die Partikel keine innere, geschlossene Porosität aufweisen.

Bei den hier betrachteten Extraktionsvorgängen handelt es sich um einphasige Strömungsvorgänge durch poröse Körper, so dass Kapillarkräfte keine Rolle spielen, was eine Vereinfachung bedeutet. Ferner sind die Durchströmungsvorgänge eher langsamer Natur, so dass ein laminarer Fluss vorliegt und somit die Reibungskräfte und nicht die Trägheitskräfte den Durchflusswiderstand bestimmen. Daher kann die Darcy - Gleichung zur Anwendung kommen, die aus empirischen Impulsbilanzen auf Basis experimenteller Untersuchungen an Sandschüttungen, die von Wasser durchströmt werden, hergeleitet wurde. Sie lautet:

$$-\partial p/\partial x = \eta / K * u_0 \qquad (2)$$

Sie beschreibt das Druckgefälle $\partial p$ über einen porösen Körper mit der Permeabilität K, der eindimensional in x - Richtung mit einem Fluid mit der dynamischen Viskosität $\eta$ und der Anströmgeschwindigkeit $u_0$ durchströmt wird. Die Anströmgeschwindigkeit $u_0$ kann durch den Quotienten aus Volumenstrom Q und der Querschnittsfläche des porösen Körpers ausgedrückt werden. Eine Integration über die Dicke l des porösen Körpers führt letztlich zu einer neuen Form der Darcy - Gleichung:

$$Q / A = K / \eta * \Delta p / l \qquad (3)$$

oder nach K umgeformt:

$$K = Q / A * \eta * l / \Delta p \qquad (4)$$

Hiermit lassen sich die Permeabilität eines porösen Körpers bestimmen. Durch eine Ableitung aus dem Hagen - Poiseuilleschen Gesetz erhält man einen weiteren Zusammenhang zwischen Permeabilität und Poren-/bzw. Kapillardurchmesser dK:

$$K = \varepsilon * d^2_K / 32 \qquad (5)$$

Hierbei ist $\varepsilon$ wiederum die Porosität, die nach der oben angegebenen Formel bestimmt werden kann.

Da die Kapillardurchmesser im Körper nur schwer zu bestimmen sind, muss der Kapillardurchmesser durch den mittleren Partikeldurchmesser $d_P$ ersetzt werden. Hier gibt es verschiedene experimentelle Arbeiten, da eine exakte Beziehung nur bei Kugelschüttungen zu erhalten ist. Bei realen Partikeln, die eine unregelmäßige Oberfläche aufweisen und auch unterschiedliche Durchmesser als Fraktion mit sich bringen, kann es nur messtechnische Beziehungen geben. Gute Ergebnisse werden nach Ergun für Sandschüttungen mit der Gleichung

$$d_P = 2{,}165 * (1 - \varepsilon) / \varepsilon * d_K \qquad (6)$$

erzielt.

Eine weitere charakterisierende Größe ist der aus der Permeabilität abgeleitete Durchlässigkeitswert. Er wird hier noch dargestellt, weil es für ihn in der Literatur Werte gibt, um die Durchlässigkeit eines porösen Körpers zu beschreiben:

$$K_F = K * \rho_F / \eta_F * g \qquad (7)$$

Hierbei sind $\rho_F$ die Dichte des durchströmenden Mediums (Wasser bei 90°C z.B. $\rho_F = 965$ kg/m$^3$), $\eta_F$ ist die dynamische Viskosität des Mediums (Wasser bei 90°C z.B. $\eta_F = 3{,}14 * 10^{-4}$ kg/m/s) und $g = 9{,}81$ m/s$^2$ ist die Erdbeschleunigung.

Aus der Literatur ist bekannt, dass ein guter Espresso neben dem geeigneten Kaffee nach folgenden Regeln zubereitet werden sollte:

  ◦ Wassermenge: V = 25 ml
  ◦ Zubereitungszeit: t = 25 s
  ◦ Durchströmdruck: p = 9 bar

Der Quotient V / t ergibt den Volumenstrom Q. Und der Durchströmdruck p ergibt mit dem Umgebungsdruck $p_U$ den Differenzdruck $\Delta p = p - p_U = 8$ bar.

Hiermit kann ein Zielwert für einen optimalen Espresso berechnet werden zu:

$$Q / \Delta p = 1{,}25 * 10^{-12} \ m^4 * s / kg \qquad (8)$$

Diesen Optimalwert erreicht ein Espresso - Barista durch einen entsprechenden Mahlgrad des Kaffees zu einem feinen Mehl und durch das Tempern bzw. Andrücken im Siebträger. Durch das feine Mahlen wird zudem ein großer Teil der inneren, geschlossenen Poren der Kaffeebohnen freigelegt, was eine optimale Extraktion ermöglicht. Für Espresso - Maschinen sind unterschiedliche Siebträger im Einsatz. Für die Untersuchungen im Rahmen der vorliegenden Patentanmeldung wurde ein Siebträger mit einem mittleren Durchmesser von 50 mm gewählt, was eine Durchströmfläche von $A = 1.963 \ mm^2$ ergibt. Bei einer üblichen Kaffeemehlmenge von 7 g ist der Kaffeemehlkuchen nach entsprechender Anpressung ca. $I = 6{,}6$ mm dick. Dies ergibt eine mittlere Dichte des Kaffeemehlkuchens von ca. $\rho_{KK}$ = 0,54 g/cm$^3$. Für die Kaffebohnen wird im Rohzustand eine Dichte von ca. $\rho_{KB,r}$ = 1,20 g/cm$^3$ und im gerösteten Zustand von ca. $\rho_{KB,g}$ = 0,5 - 0,6 g/cm$^3$ angegeben. Dies ist begründet durch den Röstverlust, d.h. die Verdampfung flüchtiger Bestandteile, und Volumenvergrößerung durch das Entstehen von einer inneren, geschlossenen Porosität. Es ist daher schwer, die äußere Porosität sicher anzugeben, da sich die Dichte der heilen, gerösteten Bohnen im gleichen Bereich wie die Dichte des angedrückten Kaffeemehlkuchens befindet. Daher wurden in der Berechnung zuerst die von dem porösen Körper unabhängigen Größen wie die Permeabilität und der Durchlässigkeitswert berechnet. In diesem Beispiel wurden erhalten:

$$K = 1{,}32 * 10^{-15} \ m^2$$

und

$$K_F = 3{,}98 * 10^{-8} \ m/s$$

Der Wert für $K_F$ deckt sich sehr gut mit Werten aus der Literatur für schwach durchlässige poröse Körper.

Da, wie oben beschrieben, die äußere, offene Porosität theoretisch nicht zu bestimmen ist, wurde ihr Wert im Berechnungsprogramm so angepasst, dass sich realistische Werte für die Partikelgröße ergeben. Aus mikroskopischen Untersuchungen erhält man mittlere Partikelgrößen für Kaffeemehl für Espresso - Anwendungen von ca. 0,3 mm. Dies korrespondiert dann mit einem Wert von $\varepsilon = 1{,}4$ %. Dieser geringe Wert für die Porosität ist einerseits durch die breite Partikelgrößenstreuung bedingt und zusätzlich erklärlich, weil es beim Brühvorgang noch zu einem Quellen des Kaffeemehls und einem Verstopfen der Kapillaren durch Ausschwemmungen von Feinstpartikeln kommt.

Durch die experimentelle Bestimmung der Porosität, die auch alle anderen beschriebenen Nebeneffekte mit abdeckt, liegen jetzt alle Informationen für einen bestimmten Kaffeemehlkörper vor. Somit lassen sich mit dieser Herleitung nun die Abhängigkeiten der einzelnen Größen untereinander bestimmen. Hierzu werden die Gleichungen (3), (5) und (6) nach dem in Gleichung (8) vorgegebenen Zielwert umgeformt und man erhält:

$$Q / \Delta p = 2 / 3 * 10^{-2} / \eta * A / \ I * \varepsilon^3 / (\varepsilon - 1)^2 * d_P{}^2$$

Auf der linken Seite steht also der Zielwert für einen guten Espresso. Will man ihn erreichen, bieten sich jetzt verschiedene Möglichkeiten durch Beeinflussung der Größen auf der rechten Seite an. Dabei sind auf der rechten Seiten die ersten Glieder feste Zahlenwerte oder Konstanten, wie die dynamische Viskosität von Wasser $\eta$, und diesen sind somit fixiert. Die Größen A und I lasen sich entweder durch die Geometrie des porösen Körpers ändern oder durch eine Beimischung eines inerten Mischungspartners mit der gleichen Größenverteilung des Kaffeemehls. Dadurch bleiben die Werte für die Porosität und den Partikeldurchmesser konstant, es wird aber bei gleichen Wirkstoffanteil die Größe A / I bei identischen Verhältnissen vergrößert und somit z.B. die Zeit für die Durchströmung oder der spezifische Durchströmwiderstand verringert.

Gemäß einer ersten besonders bevorzugten Ausführungsform der vorliegenden Erfindung enthält die Pulvermischung des Presslings der Kapsel ein Polysaccharid umfassendes Pulver mit einer ersten mittleren Partikelgröße A und ii) einen Füllstoff mit einer zu der ersten mittleren Partikelgröße A gleichen mittleren Partikelgröße C.

Durch die Beimischung eines inerten Mischungspartners mit der gleichen mittleren Partikelgröße wie der des Kaffeemehls wird, bei gleicher Pressdichte wie für das Kaffeemehl alleine, eine Volumenvergrößerung des Presslings bei gleichbleibender Menge des Kaffeemehls erreicht, was eine quadratische Erhöhung der Kapillaranzahl bei lediglich linearer Vergrößerung der Kapillarlänge bedeutet. Dadurch wird der Durchströmwiderstand des Presslings verringert. Wird hingegen das Volumen des Presslings so eingestellt wie das eines vergleichbaren Presslings nur aus Kaffeemehl, also wird der Pressdruck entsprechend der Menge an beigemischtem Füllstoff gegenüber dem für das Kaffeemehl alleine verwendeten Pressdrucks erhöht, wird durch die Beimischung die Porosität erhöht.

Bei dieser Ausführungsform der vorliegenden Erfindung ist es insbesondere bevorzugt, dass die Kapsel einen mit wenigstens einer ein vernetztes Polysaccharid umfassenden Beschichtungsschicht ummantelten Pressling umfasst, welcher ein vergleichsweise feines Polysaccharid umfassendes Pulver und besonders bevorzugt vergleichsweise feines Kaffeemehl enthält. Vorzugsweise beträgt die mittlere Partikelgröße A des vergleichsweise feinen Polysaccharid umfassenden Pulvers 0,01 bis weniger als 0,5 mm, weiter bevorzugt 0,1 bis 0,4 mm, besonders bevorzugt 0,2 bis 0,4 mm und ganz besonders bevorzugt 0,25 bis 0,35 mm. Pulver mit einer solchen mittleren Partikelgröße bildet beim Pressen Presslinge mit einer vergleichsweise geringen Porosität und damit mit einem vergleichsweise großen Durchströmwiderstand, welche sich daher für die Verarbeitung in Kaffeevollautomaten, wenn überhaupt, schlecht eignen, da sie eine lange Extraktionszeit für heißes Wasser zur Herstellung eines Extraktes des Polysaccharids und anderer Inhaltsstoffe aus dem Pressling benötigen.

Erfindungsgemäß wird der Durchströmwiderstand des Presslings bei dieser Ausführungsform durch das Zumischen von einem Füllstoff, vorzugsweise einem inerten Füllstoff, mit einer mittleren Partikelgröße C, welche identisch zur der ersten mittleren Partikelgröße A ist, dadurch verringert, dass durch die Variation des Anteils des inerten Mischungspartners das Volumen des Formkörpers bei gleicher Pressdichte vergrößert wird. Geschieht dies in allen drei Dimensionen gleichmäßig, überwiegt der Einfluss der quadratisch anwachsenden Anzahl an Kapillaren über die größere Kapillarlänge. Dies bewirkt dann die Vergrößerung der Porosität. Alternativ dazu wird der Durchströmwiderstand des Presslings durch Zumischen des Füllstoffs dadurch verringert, dass durch Variation des Anteils des inerten Mischungspartners die Pressdichte des Formkörpers bei gleichem Volumen eingestellt werden kann. Dies bewirkt über die unterschiedliche Kapillarität eine veränderte Porosität.

Um einen geeigneten Durchströmwiderstand einzustellen, wird es in Weiterbildung des Erfindungsgedankens vorgeschlagen, dass bei dieser Ausführungsform die Pulvermischung des Presslings mindestens 50 Gew.-% des Polysaccharid umfassenden Pulvers mit der ersten mittleren Partikelgröße A und 1 bis 40 Gew.-% des Füllstoffs, vorzugsweise inerten Füllstoffs, mit der identischen mittleren Partikelgröße C enthält, bevorzugt mindestens 60 Gew.-% des Polysaccharid umfassenden Pulvers mit der ersten mittleren Partikelgröße A und 2 bis 30 Gew.-% des Füllstoffs, vorzugsweise inerten Füllstoffs, mit der identischen mittleren Partikelgröße C enthält.

Vorzugsweise weist bei dieser Ausführungsform der vorliegenden Erfindung das Polysaccharid umfassende Pulver, also besonders bevorzugt das Kaffeemehl, eine erste Partikelgrößenverteilung auf und weist der Füllstoff die gleiche Partikelgrößenverteilung auf. Gemäß der vorliegenden Erfindung wird die Partikelgrößenverteilung durch die Durchmesser $d_{90}$ und $d_{10}$ charakterisiert, wobei gleiche Partikelgrößenverteilung heißt, dass das Verhältnis $d_{90}/d_{10}$ für das Kaffeemehl gleich dem entsprechendem Verhältnis für den Füllstoff ist. Dabei bedeutet die Partikelgröße $d_{90}$ den Wert des Durchmessers, der von 90% der vorliegenden Partikel unterschritten wird, und die Partikelgröße $d_{10}$ den Wert des Durchmessers, der von 10% der vorliegenden Partikel unterschritten wird.

Gemäß einer zweiten besonders bevorzugten Ausführungsform der vorliegenden Erfindung enthält die Pulvermischung des Presslings der Kapsel ein Polysaccharid umfassendes Pulver mit einer ersten mittleren Partikelgröße A und ii) ein Polysaccharid umfassendes Pulver mit einer von der ersten mittleren Partikelgröße A verschiedenen zweiten mittleren Partikelgröße B und/oder einen Füllstoff mit einer von der ersten mittleren Partikelgröße A verschiedenen mittleren Partikelgröße C, wobei die mittlere Partikelgröße B und/oder die mittlere Partikelgröße C kleiner sind als die erste mittlere Partikelgröße A.

Bei dieser Ausführungsform der vorliegenden Erfindung ist es insbesondere bevorzugt, dass die Kapsel einen mit wenigstens einer ein vernetztes Polysaccharid umfassenden Beschichtungsschicht ummantelten Pressling umfasst, welcher ein vergleichsweise grobes Polysaccharid umfassendes Pulver und besonders bevorzugt vergleichsweise grobes Kaffeemehl enthält. Vorzugsweise beträgt die mittlere Partikelgröße A des vergleichsweise grobes Polysaccharid umfassenden Pulvers 0,5 bis 1,5 mm, weiter bevorzugt 0,7 bis 1,3 mm, besonders bevorzugt 0,8 bis 1,2 mm und ganz besonders bevorzugt 0,9 bis 1,1 mm. Pulver mit einer solchen mittleren Partikelgröße bildet beim Pressen Presslinge mit einer vergleichsweise großen Porosität und damit mit einem zu geringen Durchströmwiderstand.

Erfindungsgemäß wird der Durchströmwiderstand des Presslings bei dieser Ausführungsform durch das Zumischen von einem Polysaccharid umfassenden Pulver, besonders bevorzugt Kaffeemehl, mit einer mittleren Partikelgröße B und/oder von Füllstoff, besonders bevorzugt einem inerten Füllstoff, mit einer mittleren Partikelgröße C, welche kleiner als die ersten mittleren Partikelgröße A sind, dadurch vergrößert, dass die Hohlräume zwischen den groben Partikeln mit der ersten mittleren Partikelgröße A durch die feineren Partikel mit der mittleren Partikelgröße B bzw. C zumindest teilweise gefüllt werden und so die Porosität des Presslings verringert wird.

Gute Ergebnisse werden bei dieser Ausführungsform insbesondere erhalten, wenn die mittlere Partikelgröße B des Polysaccharid umfassenden Pulvers 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm beträgt.

Gleichermaßen ist es bei dieser Ausführungsform bevorzugt, dass die mittlere Partikelgröße C des Füllstoffs, vorzugsweise inerten Füllstoffs, 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm beträgt.

Um einen geeigneten Durchströmwiderstand einzustellen, wird es in Weiterbildung des Erfindungsgedankens vorgeschlagen, dass bei dieser Ausführungsform die Pulvermischung des Presslings mindestens 50 Gew.-% des Polysaccharid umfassenden Pulvers mit der ersten mittleren Partikelgröße A und 1 bis 40 Gew.-% des Polysaccharid umfassenden Pulvers mit der zweiten Partikelgröße B und/oder des Füllstoffs, vorzugsweise inerten Füllstoffs, mit der mittleren Partikelgröße C enthält, bevorzugt mindestens 60 Gew.-% des Polysaccharid umfassenden Pulvers mit der ersten mittleren Partikelgröße A und 2 bis 30 Gew.-% des Polysaccharid umfassenden Pulvers mit der zweiten mittleren Partikelgröße B und/oder des Füllstoffs, vorzugsweise inerten Füllstoffs, mit der zweiten mittleren Partikelgröße C enthält.

Vorzugsweise weist bei dieser Ausführungsform der vorliegenden Erfindung das Polysaccharid umfassende Pulver, also besonders bevorzugt das Kaffeemehl, mit der ersten mittleren Partikelgröße A eine erste Partikelgrößenverteilung auf und weist das Polysaccharid umfassende Pulver mit der mittleren Partikelgröße B und/oder der Füllstoff eine andere Partikelgrößenverteilung auf. Gemäß der vorliegenden Erfindung wird die Partikelgrößenverteilung durch die Durchmesser $d_{90}$ und $d_{10}$ charakterisiert, wobei gleiche Partikelgrößenverteilung heißt, dass das Verhältnis $d_{90}/d_{10}$ für das Kaffeemehl gleich dem entsprechendem Verhältnis für den Füllstoff ist. Dabei bedeutet die Partikelgröße $d_{90}$ den Wert des Durchmessers, der von 90% der vorliegenden Partikel unterschritten wird, und die Partikelgröße $d_{10}$ den Wert des Durchmessers, der von 10% der vorliegenden Partikel unterschritten wird.

Gemäß einer dritten besonders bevorzugten Ausführungsform der vorliegenden Erfindung enthält die Pulvermischung des Presslings der Kapsel ein Polysaccharid umfassendes Pulver mit einer ersten mittleren Partikelgröße A und ii) ein Polysaccharid umfassendes Pulver mit einer von der ersten mittleren Partikelgröße A verschiedenen zweiten mittleren Partikelgröße B und/oder einen Füllstoff mit einer von der ersten mittleren Partikelgröße A verschiedenen mittleren Partikelgröße C, wobei die mittlere Partikelgröße B und/oder die mittlere Partikelgröße C größer sind als die erste mittlere Partikelgröße A.

Bei dieser Ausführungsform der vorliegenden Erfindung ist es insbesondere bevorzugt, dass die Kapsel einen mit wenigstens einer ein vernetztes Polysaccharid umfassenden Beschichtungsschicht ummantelten Pressling umfasst, welcher ein vergleichsweise feines Polysaccharid umfassendes Pulver und besonders bevorzugt vergleichsweise feines Kaffeemehl enthält. Vorzugsweise beträgt die mittlere Partikelgröße A des vergleichsweise feinen Polysaccharid umfassenden Pulvers 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm. Pulver mit einer solchen mittleren Partikelgröße bildet beim Pressen Presslinge mit einer vergleichsweise geringen Porosität und damit mit einem vergleichsweise großen Durchströmwiderstand.

Erfindungsgemäß wird der Durchströmwiderstand des Presslings bei dieser Ausführungsform durch das Zumischen von einem Polysaccharid umfassenden Pulver, besonders bevorzugt Kaffeemehl, mit einer mittleren Partikelgröße B und/oder von Füllstoff, besonders bevorzugt einem inerten Füllstoff, mit einer mittleren Partikelgröße C, welche größer als die ersten mittleren Partikelgrößen A sind, verringert. Ohne diesbezüglich an eine Theorie gebunden sein zu wollen, wird es im Rahmen der vorliegenden Erfindung erachtet, dass sich durch ein "Verhaken" zwischen den gröberen Partikeln größere durchgehende Kapillaren bilden, die dann das bessere Durchströmen ermöglichen. Dennoch kommt es nicht zu einem sogenannten "Channeling" wie bei herkömmlichen Espresso - Siebträgermaschinen, weil hier der Pressling in der Brühkammer und mittels der Ummantelung soweit zusammengehalten wird, dass sich die Kapillaren nicht zu weit aufweiten können.

Gute Ergebnisse werden bei dieser Ausführungsform insbesondere erhalten, wenn die mittlere Partikelgröße B des Polysaccharid umfassenden Pulvers 0,5 bis 1,5 mm, weiter bevorzugt 0,6 bis 1,2 mm, besonders bevorzugt 0,7 bis 1,2 mm und ganz besonders bevorzugt 0,8 bis 1,2 mm beträgt.

Gleichermaßen ist es bei dieser Ausführungsform bevorzugt, dass die mittlere Partikelgröße C des Füllstoffs, vorzugsweise inerten Füllstoffs, 0,5 bis 1,5 mm, weiter bevorzugt 0,6 bis 1,2 mm, besonders bevorzugt 0,7 bis 1,2 mm und ganz besonders bevorzugt 0,8 bis 1,2 mm beträgt.

Um einen geeigneten Durchströmwiderstand einzustellen, wird es in Weiterbildung des Erfindungsgedankens vorgeschlagen, dass bei dieser Ausführungsform die Pulvermischung des Presslings mindestens 50 Gew.-% des Polysaccharid umfassenden Pulvers mit der ersten mittleren Partikelgröße A und 1 bis 40 Gew.-% des Polysaccharid umfassenden Pulvers mit der zweiten mittleren Partikelgröße B und/oder des Füllstoffs, vorzugsweise inerten Füllstoffs, mit der zweiten mittleren Partikelgröße C enthält, bevorzugt mindestens 60 Gew.-% des Polysaccharid umfassenden Pulvers mit der ersten mittleren Partikelgröße A und 2 bis 30 Gew.-% des Polysaccharid umfassenden Pulvers mit der zweiten mittleren Partikelgröße B und/oder des Füllstoffs, vorzugsweise inerten Füllstoffs, mit der zweiten mittleren Partikelgröße C enthält.

Vorzugsweise weist bei dieser Ausführungsform der vorliegenden Erfindung das Polysaccharid umfassende Pulver, also besonders bevorzugt das Kaffeemehl, mit der ersten mittleren Partikelgröße A eine erste Partikelgrößenverteilung auf und weist das Polysaccharid umfassende Pulver mit der mittleren Partikelgröße B und/oder der Füllstoff eine andere Partikelgrößenverteilung auf. Gemäß der vorliegenden Erfindung wird die Partikelgrößenverteilung durch die Durchmesser $d_{90}$ und $d_{10}$ charakterisiert, wobei gleiche Partikelgrößenverteilung heißt, dass das Verhältnis $d_{90}/d_{10}$ für das Kaffeemehl gleich dem entsprechendem Verhältnis für den Füllstoff ist. Dabei bedeutet die Partikelgröße $d_{90}$ den Wert des Durchmessers, der von 90% der vorliegenden Partikel unterschritten wird, und die Partikelgröße $d_{10}$ den Wert des Durchmessers, der von 10% der vorliegenden Partikel unterschritten wird.

Gemäß einer vierten besonders bevorzugten Ausführungsform der vorliegenden Erfindung enthält die Pulvermischung des Presslings der Kapsel ein Polysaccharid umfassendes Pulver mit einer ersten mittleren Partikelgröße A und ii) einen Füllstoff mit einer länglichen Form mit einem Aspektverhältnis von größer als 2, bevorzugt von größer als 3, besonders bevorzugt von größer als 5 und höchst bevorzugt von größer als 10. Als Aspektverhältnis wird hier der Quotient der längsten Erstreckung des Füllstoffteilchens zu der kürzesten Erstreckung des Füllstoffteilchens verstanden. Vorzugsweise werden als Füllstoff Cellulosefasern eingesetzt.

Durch die Beimischung von faserigem Füllstoff, wie insbesondere Cellulosefasern, wird eine Erhöhung der Porosität erreicht, weil sich entlang der länglichen Cellulosefasern feine Kapillare ausbilden, die ein besseres Durchströmen ermöglichen.

Bei dieser Ausführungsform der vorliegenden Erfindung ist es insbesondere bevorzugt, dass die Kapsel einen mit wenigstens einer ein vernetztes Polysaccharid umfassenden Beschichtungsschicht ummantelten Pressling umfasst, welcher ein vergleichsweise feines Polysaccharid umfassendes Pulver und besonders bevorzugt vergleichsweise feines Kaffeemehl enthält. Vorzugsweise beträgt die mittlere Partikelgröße A des vergleichsweise feinen Polysaccharid umfassenden Pulvers 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm. Pulver mit einer solchen mittleren Partikelgröße bildet beim Pressen Presslinge mit einer vergleichsweise geringen Porosität und damit mit einem vergleichsweise großen Durchströmwiderstand.

Erfindungsgemäß wird der Durchströmwiderstand des Presslings bei dieser Ausführungsform durch das Zumischen von faserigem Füllstoff verringert. Ohne diesbezüglich an eine Theorie gebunden sein zu wollen, wird es im Rahmen der vorliegenden Erfindung erachtet, dass sich durch ein "Verhaken" zwischen den länglichen Teilchen größere durchgehende Kapillaren bilden, die dann das bessere Durchströmen ermöglichen. Dennoch kommt es nicht zu einem sogenannten "Channeling" wie bei herkömmlichen Espresso - Siebträgermaschinen, weil hier der Pressling in der Brühkammer und mittels der Ummantelung soweit zusammengehalten wird, dass sich die Kapillaren nicht zu weit aufweiten können.

Zudem ist es bei dieser Ausführungsform bevorzugt, dass die längste Erstreckung des faserigen Füllstoffs, vorzugsweise inerten Füllstoffs, 0,5 bis 3,0 mm, weiter bevorzugt 0,6 bis 2,4 mm, besonders bevorzugt 0,7 bis 2,4 mm und ganz besonders bevorzugt 0,8 bis 2,4 mm beträgt. Vorzugsweise beträgt die kürzeste Erstreckung des faserigen Füllstoffs ein Drittel bis ein Achtel der längsten Erstreckung.

Um einen geeigneten Durchströmwiderstand einzustellen, wird es in Weiterbildung des Erfindungsgedankens vorgeschlagen, dass bei dieser Ausführungsform die Pulvermischung des Presslings mindestens 50 Gew.-% des Polysaccharid umfassenden Pulvers mit der ersten mittleren Partikelgröße A und 1 bis 40 Gew.-% des faserigen Füllstoffs, vorzugsweise inerten Füllstoffs und besonders bevorzugt Cellulosefasern enthält, bevorzugt mindestens 60 Gew.-% des Polysaccharid umfassenden Pulvers mit der ersten mittleren Partikelgröße A und 2 bis 30 Gew.-% des faserigen Füllstoffs enthält.

Bezüglich des Polysaccharid umfassenden Pulvers, welches in der Pulvermischung enthalten ist, aus welcher der Pressling der erfindungsgemäßen Kapsel zusammengesetzt ist, ist die vorliegende Erfindung nicht besonders limitiert. Gute Ergebnisse werden insbesondere erhalten, wenn die Pulvermischung des Presslings ein Polysaccharid umfassendes Pulver enthält, welches aus der Gruppe ausgewählt ist, welche aus Kaffee, Tee, Trinkschokolade, Kakao und Milchpulver besteht. Gute Ergebnisse werden insbesondere erhalten, wenn die Pulvermischung des Presslings als Polysaccharid umfassendes Pulver gemahlenes Kaffeemehl enthält.

Gemäß einer besonders bevorzugten Ausführungsform der vorliegenden Erfindung ist der in der Pulvermischung, aus welcher der Pressling der erfindungsgemäßen Kapsel zusammengesetzt ist, enthaltene Füllstoff ein inerter Füllstoff, d.h. ein Füllstoff, welcher ein zugelassenes Lebensmittel oder ein zugelassener Lebensmittelzusatzstoff ist und vorzugsweise zudem lagerstabil, geruchsneutral sowie geschmacksneutral ist. Im Hinblick auf diese Eigenschaften hat es sich als besonders vorteilhaft erwiesen, wenn der in der Pulvermischung, aus welcher der Pressling der erfindungsgemäßen Kapsel zusammengesetzt ist, enthaltene Füllstoff ein inertes Material enthält oder bevorzugt aus einem inerten Material besteht, welches besonders bevorzugt aus der Gruppe ausgewählt ist, welche aus Siliziumdioxid, Calciumsilikaten, Cellulose, Methylcellulose, Calciumcarbonat, Titandioxid, Johannisbrotkernmehl, Aluminiumsilikaten und beliebigen Mischungen aus zwei oder mehr der vorgenannten Materialien besteht.

Unter einem Pressling wird im Sinne der vorliegenden Erfindung verdichtetes Pulver verstanden. Gute Ergebnisse werden insbesondere erhalten, wenn der Pressling der erfindungsgemäßen Kapsel durch Pressen einer Pulvermischung, insbesondere einer Kaffeemehl enthaltenden Pulvermischung, mit einem Druck von 1 bis 100 MPa, bevorzugt 5 bis 50 MPa und besonders bevorzugt 15 bis 30 MPa erhältlich ist. Hierdurch ist eine ausreichende Verdichtung gegeben, damit eine sichere Ummantelung des Presslings vorgenommen werden kann und eine gute Sauerstoffbarriere erreicht wird. Bei niedrigeren Drücken gibt es keinen ausreichenden Zusammenhalt und bei höheren Drücken kommt es zu einer zu starken Verdichtung, die sich unter Umständen nach Entnahme aus der Presse wieder entspannt, was zu einer Zerstörung der Kapseln führen kann.

Grundsätzlich kann der Pressling eine beliebige Form aufweisen, wie beispielsweise die Form eines Kegelstumpfs, Kegels, Ellipsoids, Zylinders, Quaders, einer Kaffeebohne oder einer Kugel. Besonders bevorzugt weist die erfindungsgemäße Kapsel die Form einer Kugel auf, da hierdurch das Verhältnis von Oberfläche zu Volumen am geringsten ist, wodurch das Aroma besonders gut konserviert wird. Zudem ermöglicht es die Kugelform, dass die Kapsel rollen kann und somit besonders gut in einem Getränkeautomat eingesetzt werden kann.

Um eine stabile Ummantelung der Kapsel zu erreichen, ist es bevorzugt, dass das vernetzte Polysaccharid der Beschichtungsschicht durch Vernetzen eines Polysaccharids mit einem Vernetzungsmittel mit oder ohne die Verwendung eines polyolen Abstandshalters erhalten wurde.

Grundsätzlich ist die vorliegende Erfindung bezüglich der chemischen Natur des Polysaccharids der wenigstens einen Beschichtungsschicht nicht limitiert. Gute Ergebnisse werden insbesondere erhalten, wenn das Polysaccharid der wenigstens einen Beschichtungsschicht aus der Gruppe ausgewählt ist, welche aus Stärke, Cellulose, Chitin, Carrageen, Agar und Alginaten besteht. Besonders bevorzugt ist das Polysaccharid der wenigstens einen Beschichtungsschicht ein Carrageen oder ein Alginat, wobei es ganz besonders bevorzugt ist, dass das Polysaccharid der wenigstens einen Beschichtungsschicht ein Alginat ist. Im Rahmen der vorliegenden Erfindung wurde herausgefunden, dass diese Polysaccharide keine Verfälschung des Geschmacks während der Zubereitung des Getränks verursachen. Im Rahmen der vorliegenden Erfindung hat es sich zudem gezeigt, dass Presslinge, wie insbesondere solche aus Kaffeemehl, mit Alginat einfach und kostengünstig ummantelt werden können. Dabei sind Alginate biologisch abbaubar und liefern eine hinreichend stabile Ummantelung und schützen den Kapselinhalt, ohne dass ein nennenswerter Aromaverlust auftritt. Im Rahmen der vorliegenden Erfindung hat es sich ferner gezeigt, dass Alginate in der Lage sind, die Wasserhärte herabzusetzen. Ein unangenehmer Säuregeschmack wird dadurch abgemildert.

Erfindungswesentlich ist, dass das Polysaccharid der wenigstens einen Beschichtungsschicht vernetzt ist. Dabei kann die Vernetzung des Polysaccharids gemäß einer Ausführungsform der vorliegenden Erfindung über kovalente Bindungen erfolgen. Eine Vernetzung über kovalente Bindungen ermöglicht sehr beständige Ummantelungen. Dabei erfolgt die Vernetzung über kovalente Bindungen üblicherweise durch die Reaktion des Polysaccharids mit einem geeigneten Vernetzer. Als Vernetzer eignen sich insbesondere difunktionelle organische Verbindungen, wobei die funktionellen Gruppen beispielsweise aus der Gruppe ausgewählt sind, die aus Carbonsäuren, Salzen von Carbonsäuren, aktivierten Carbonsäuren, Aminen, Alkoholen, Aldehyden und Ketonen besteht. Unter aktivierten Carbonsäuren werden in diesem Zusammenhang Carbonsäurehalogenide, Aktivester von Carbonsäuren, Anhydride von Carbonsäuren oder andere reaktive Derivate von Carbonsäuren verstanden.

Gemäß einer alternativen und besonders bevorzugten Ausführungsform der vorliegenden Erfindung ist das Polysaccharid der wenigstens einen Beschichtungsschicht über ionische und/oder koordinative Bindungen vernetzt. Derartige über ionische und/oder koordinative Bindungen vernetzte Polysaccharide lassen sich besonders einfach herstellen und beeinträchtigen nicht die biologische Abbaubarkeit des verwendeten Polysaccharids. Die ionische und/oder koordinative Vernetzung kann beispielsweise mittels Polysacchariden erreicht werden, welche anionische Gruppen, wie Carboxylatgruppen oder Sulfonatgruppen, aufweisen. Durch Einbringen zweiwertiger oder höherwertiger Kationen, insbesondere Erdalkalimetallionen, erfolgt dann eine ionische bzw. koordinative Vernetzung der anionischen Gruppen des Polysaccharids, um eine stabile ummantelnde Schicht auszubilden.

Eine koordinative Bindung bezeichnet in diesem Zusammenhang eine Wechselwirkung zwischen einem Elektronenpaardonor und einem Elektronenpaarakzeptor, wie sie beispielsweise zwischen freien Elektronenpaaren von Sauerstoffatomen in Hydroxygruppen und Kationen stattfinden kann.

Ganz besonders bevorzugt handelt es sich bei dem vernetzten Polysaccharid um ein Erdalkalimetallalginat und höchst bevorzugt um ein Calciumalginat. In diesem Fall sind die Calciumionen der Vernetzer, da sie koordinative bzw. ionische Bindungen mit Gruppen des Alginats eingehen. Es wurde im Rahmen der vorliegenden Erfindung überraschenderweise herausgefunden, dass eine Ummantelung, welche Calciumalginat umfasst, eine wasserunlösliche Schicht bereitstellt, die den Geschmack des aus der Kapsel hergestellten Getränks nicht beeinträchtigt und eine ausreichende Stabilität der Kapsel bereitstellt, um einen Transport- und Anfassschutz sicherzustellen, ohne dass der Kapselinhalt einen nennenswerten Aromaverlust erleidet. Zudem ist Calciumalginat biologisch hervorragend abbaubar. Ein weiterer Vorteil ist, dass es sich bei Calciumalginat um einen zugelassenen Lebensmittelzusatzstoff mit der E-Nummer E405 handelt und daher gesundheitlich unbedenklich ist. Bei dieser Ausführungsform ist es zudem bevorzugt, dass der Kapselinhalt, also der Pressling aus Polysaccharid, zumindest im Wesentlichen frei von Erdalkalimetallionen und insbesondere Calciumionen ist, worunter verstanden wird, dass der Pressling, außer den etwaig in dem Polysaccharid, aus dem der Pressling hergestellt wurde, natürlich enthaltenen Erdalkalimetallionen und insbesondere Calciumionen, keine weiteren Erdalkalimetallionen und insbesondere Calciumionen enthält. Insbesondere ist es bevorzugt, dass der in der Kapsel enthaltene Pressling oder zumindest 80% des Innenvolumens des Presslings eine Erdalkalimetallionenkonzentration und insbesondere Calciumionenkonzentration von weniger als 1 mol/l, bevorzugt von weniger als 0,1 mol/l, weiter bevorzugt von weniger als 0,001 mol/l, besonders bevorzugt von weniger als 0,001 mol/l, ganz besonders bevorzugt von weniger als 0,0001 mol/l und höchst bevorzugt von weniger als 0,00001 mol/l aufweist. Unter 80% des Innenvolumens des Presslings wird das Volumen verstanden, welches erhalten wird, wenn von der längsten radial von dem Mittelpunkt zu der Außenfläche des Presslings führenden Strecke um den bei 80% ausgehend von dem Mittelpunkt zu der Außenfläche der Strecke liegenden Punkt eine Kugelfläche gespannt wird. Eine Kontamination des Presslings mit Erdalkalimetallionen und insbesondere Calciumionen kann dadurch verhindert werden, dass die Erdalkalimetallionen und insbesondere Calciumalginatbeschichtung dadurch hergestellt wird, dass der Pressling zuerst mit einer Alkalimetallalginatlösung kontaktiert und erst danach unter Ausbildung der Calciumalginatbeschichtung mit einer Erdalkalimetallionen und insbesondere Calciumionen enthaltenden Flüssigkeit kontaktiert wird und nicht erst mit einer Erdalkalimetallionen und insbesondere Calciumionen enthaltenden Flüssigkeit kontaktiert wird, bevor eine Alkalimetallalginatlösung zugegeben wird.

Grundsätzlich kann die erfindungsgemäße Kapsel lediglich eine Beschichtungsschicht aus vernetztem Polysaccharid umfassen. Um die Stabilität der Kapsel und somit die Transportsicherheit und den Anfassschutz zu erhöhen, wird es in Weiterbildung des Erfindungsgedankens vorgeschlagen, dass die erfindungsgemäße Kapsel zwei oder mehr Beschichtungsschichten umfasst. Vorzugsweise ist der Pressling der Kapsel mit 2 bis 100, besonders bevorzugt mit 2 bis 20, ganz besonders bevorzugt mit 2 bis 10 und höchst bevorzugt mit 2 bis 5 Beschichtungsschichten ummantelt. Durch die Ummantelung des Presslings der Kapsel mit zwei oder mehr Beschichtungsschichten wird auch die Wirkung der Beschichtung als Sauerstoffbarriere sowie die damit verbundene Bereitstellung eines wirksamen Aromaschutzes in besonders hohem Ausmaß erreicht.

Es hat sich gezeigt, dass die erste Beschichtungsschicht als Gel in die nach wie vor raue Oberfläche des Presslings einzieht und zu einer glatteren Oberfläche führt. Dies bedeutet eine weitere Oberflächenverringerung, was der Aromadichtheit weiter entgegen kommt. Mit weiteren Beschichtungsschichten wird dann eine noch glattere Oberfläche erreicht, die auch die notwendige Stabilität aufweist, so dass selbst härtere Stöße ohne beschädigende Wirkung bleiben.

Gemäß einer weiteren besonders bevorzugten Ausführungsform der vorliegenden Erfindung besteht die Beschichtung der Kapsel aus 2 bis 100, bevorzugt 2 bis 20, besonders bevorzugt 2 bis 10 und höchst bevorzugt 2 bis 5 den Pressling ummantelnden Calciumalginatschichten.

Die einzelnen Beschichtungsschichten weisen, je nach Viskosität der Natriumalginatlösung und dem eingesetzten Verfahren, Dicken zwischen 50 und 600 $\mu$m auf. Besonders bevorzugt sind Schichtdicken von 100 bis 300 $\mu$m für die erste Beschichtungsschicht anzusehen, da sie den optimalen Kompromiss zwischen Stabilität und Trocknungsgeschwindigkeit aufweisen. Nachfolgende Beschichtungsschichten sind vorzugsweise dünner und liegen bevorzugt zwischen 50 und 200 $\mu$m, um eine schnelle Trocknung zu ermöglichen.

Dabei ist eine dünne Beschichtungsschicht bevorzugt, um das im Gel enthaltene Wasser leichter zu entfernen, und, um ein möglichst schnelles Eindiffundieren des Vernetzungsmittels, d.h. der Calciumionen, in das Natriumalginat zu erleichtern. Prinzipiell ließe sich die Geschwindigkeit des Eindiffundierens der Calciumionen in das Natriumalginat auch durch eine höhere Konzentration des Vernetzungsmittels erhöhen; allerdings haben sich bei der praktischen Umsetzung dieser Variante dünne Beschichtungsdicken als vorteilhaft für die Geschwindigkeit des Eindiffundierens und die Handhabung erwiesen.

Ein weiterer Gegenstand der vorliegenden Erfindung ist ein Verfahren zur Einstellung des Durchströmwiderstandes einer Kapsel, insbesondere zur Zubereitung eines Getränkes aus Getränkepulver, insbesondere von Kaffee aus Kaffeemehl, durch Einbringen von Wasser in die Kapsel, wobei das Verfahren die folgenden Schritte umfasst:

i) Bereitstellen eines Presslings aus einer Pulvermischung, welche ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff mit einer von der ersten Partikelgröße A verschiedenen oder zu der ersten Partikelgröße A gleichen Partikelgröße C enthält, und

ii) Ummanteln des Presslings mit einer vernetztes Polysaccharid umfassenden Beschichtungsschicht.

Die vorstehend in Bezug auf die erfindungsgemäße Kapsel beschriebenen bevorzugten Merkmale sind auch für das erfindungsgemäße Verfahren bevorzugt. Ferner betrifft die vorliegende Erfindung ein Verfahren zur Herstellung einer Kapsel, welches die folgenden Schritte umfasst:

i) Bereitstellen eines Presslings aus einer Pulvermischung, welche ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff mit einer von der ersten Partikelgröße A verschiedenen oder zu der ersten Partikelgröße A gleichen Partikelgröße C enthält,

ii) in Kontakt bringen wenigstens eines Teils und vorzugsweise der gesamten Oberfläche des in dem Schritt i) erhaltenen Presslings mit einer Lösung eines Polysaccharids in einem Lösungsmittel oder mit einer Dispersion eines Polysaccharids in einem Dispergiermittel,

iii) ggf. Entnehmen des Presslings aus der Lösung oder der Dispersion des Schritts ii),

iv) in Kontakt bringen des in dem Schritt ii) oder iii) erhaltenen Presslings mit wenigstens einem Vernetzungsmittel,

v) ggf. Entnehmen des Presslings aus der Lösung des Schritts iv) und

vi) Trocknen des in dem Schritt iv) oder v) erhaltenen Presslings.

Das in Kontakt bringen des Presslings in dem Schritt ii) wird vorzugsweise so durchgeführt, dass wenigstens ein Teil der Oberfläche und vorzugsweise die gesamte Oberfläche des Presslings mit der Lösung oder der Dispersion des Polysaccharids benetzt wird. Beispielsweise erfolgt das in Kontakt bringen des Presslings in den Schritten ii) und iv) unabhängig voneinander durch Eintauchen, Besprühen oder Überziehen des Presslings mit der Lösung oder der Dispersion des Polysaccharids bzw. mit dem Vernetzungsmittel.

Das erfindungsgemäße Verfahren ermöglicht es, den Pressling gleichmäßig zu ummanteln, und zwar insbesondere auch dann, wenn der Pressling kugelförmig ist, ohne dass ein Rand oder eine Nahtstelle entsteht.

Bei dem Lösungsmittel oder Dispergiermittel handelt es sich bevorzugt um ein wasserbasiertes Lösungsmittel oder Dispergiermittel. Besonders bevorzugt handelt es sich bei dem Lösungsmittel oder Dispergiermittel um Wasser.

Bevorzugt wird der Pressling in dem Schritt ii) in eine wässrige 0,5 bis 5 gew.-%-ige Alkalimetallalginatlösung eingetaucht oder damit besprüht. Besonders bevorzugt wird der Pressling in dem Schritt ii) in eine wässrige 1 bis 2 gew.-%-ige Alkalimetallalginatlösung eingetaucht oder damit besprüht. Bei einer Konzentration von weniger als 0,5 Gew.-% ist die Alkalimetallalginatlösung nicht konzentriert genug und zu niederviskos, um bei einem einfachen Eintauchen oder Besprühen eine ausreichende Menge Alkalimetallalginat auf dem Pressling aufzubringen, um in den nachfolgenden Schritten eine ausreichend stabile Ummantelung herzustellen. Übersteigt die Konzentration des Alkalimetallalginats 5 Gew.-%, ist die Viskosität der Alkalimetallalginatlösung so hoch, dass die Ausbildung einer vollständigen Ummantelung erschwert ist. Zudem nehmen die Beschichtungsdicken bei einer Konzentration des Alkalimetallalginats von über 5 Gew.-% zu, wodurch die Trocknung erschwert wird.

Die Trocknung in dem Schritt vi) kann auf unterschiedliche Weise erfolgen, wobei sich verschiedene Trocknungsverfahren bewährt haben. Ein sehr gleichmäßiges Trocknen kann unter anderem, aber nicht ausschließlich, durch Trocknen im Luftstrom in geeigneten Kanälen erzielt werden, wobei der Pressling frei schwebt und gleichmäßig durch Eigendrehung trocknet. Um das durch die sich ausbildende Beschichtungsschicht ausdiffundierende Wasser besser aufnehmen zu können, hat sich auch eine Kontakttrocknung an aufsaugenden oder warmen Oberflächen bewährt. Beide Prinzipien lassen sich in einer Art Schwebebettrinne kombinieren.

Als weitere sehr effiziente Trocknungsprinzipien können auch Infrarottrockner und Mikrowellentrockner eingesetzt werden.

Ein weiterer Gegenstand der vorliegenden Erfindung ist die Verwendung der erfindungsgemäßen Kapsel zum Herstellen eines Getränks durch in Kontakt bringen der erfindungsgemäßen Kapsel mit Wasser. Vorzugsweise enthält die Kapsel ein Material, welches aus der Gruppe ausgewählt ist, welche aus Kaffee, Tee, Trinkschokolade, Kakao und Milchpulver besteht.

Die Verwendung der erfindungsgemäßen Kapsel zur Herstellung eines Kaffeegetränks erlaubt die portionsweise Zubereitung des Getränks je nach anfallendem Bedarf. Ein besonderer Vorteil der erfindungsgemäßen Verwendung ist, dass nur biologisch abbaubarerer Abfall entsteht.

Bei der Verwendung der erfindungsgemäßen Kapsel zur Zubereitung eines Getränkes, insbesondere Kaffeegetränkes, wird die Kaffeekapsel bevorzugt zerdrückt oder perforiert, bevor anschließend eine Extraktion der zerdrückten bzw. perforierten Kaffeekapsel mit Wasser erfolgt.

**Patentansprüche**

1. Kapsel, insbesondere zur Zubereitung eines Getränkes aus Getränkepulver, insbesondere von Kaffee aus Kaffeemehl, durch Einbringen von Wasser in die Kapsel, wobei die Kapsel einen Pressling aus einer Pulvermischung umfasst und der Pressling mit wenigstens einer ein vernetztes Polysaccharid umfassenden Beschichtungsschicht ummantelt ist, **dadurch gekennzeichnet, dass** die Pulvermischung des Presslings i) ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff mit einer von der ersten Partikelgröße A verschiedenen oder zu der ersten Partikelgröße A gleichen Partikelgröße C enthält.

2. Kapsel nach Anspruch 1, **dadurch gekennzeichnet, dass** die Pulvermischung des Presslings der Kapsel ein Polysaccharid umfassendes Pulver mit einer ersten mittleren Partikelgröße A und ii) einen Füllstoff mit einer zu der ersten mittleren Partikelgröße A gleichen mittleren Partikelgröße C enthält.

3. Kapsel nach Anspruch 2, **dadurch gekennzeichnet, dass** die erste mittlere Partikelgröße A 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm beträgt.

4. Kapsel nach Anspruch 1, **dadurch gekennzeichnet, dass** die Pulvermischung des Presslings der Kapsel ein Polysaccharid umfassendes Pulver mit einer ersten mittleren Partikelgröße A und ii) a) ein Polysaccharid umfassendes Pulver mit einer von der ersten mittleren Partikelgröße A verschiedenen zweiten mittleren Partikelgröße B und/oder b) einen Füllstoff mit einer von der ersten mittleren Partikelgröße A verschiedenen mittleren Partikelgröße C enthält, wobei die mittlere Partikelgröße B und/oder die mittlere Partikelgröße C kleiner sind als die erste mittlere Partikelgröße A.

5. Kapsel nach Anspruch 4, **dadurch gekennzeichnet, dass** die mittlere Partikelgröße A des Polysaccharid umfassenden Pulvers 0,5 bis 1,5 mm, weiter bevorzugt 0,7 bis 1,3 mm, besonders bevorzugt 0,8 bis 1,2 mm und ganz besonders bevorzugt 0,9 bis 1,1 mm beträgt, und, dass die mittlere Partikelgröße B und/oder die mittlere Partikelgröße C 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm betragen.

6. Kapsel nach Anspruch 1, **dadurch gekennzeichnet, dass** die Pulvermischung des Presslings der Kapsel ein Polysaccharid umfassendes Pulver mit einer ersten mittleren Partikelgröße A und ii) a) ein Polysaccharid umfassendes Pulver mit einer von der ersten mittleren Partikelgröße A verschiedenen zweiten mittleren Partikelgröße B und/oder b) einen Füllstoff mit einer von der ersten mittleren Partikelgröße A verschiedenen mittleren Partikelgröße C enthält, wobei die mittlere Partikelgröße B und/oder die mittlere Partikelgröße C größer sind als die erste mittlere Partikelgröße A.

7. Kapsel nach Anspruch 6, **dadurch gekennzeichnet, dass** die mittlere Partikelgröße A des Polysaccharid umfassenden Pulvers 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm beträgt, und, dass die mittlere Partikelgröße B und/oder die mittlere Partikelgröße C 0,5 bis 1,5 mm, weiter bevorzugt 0,6 bis 1,2 mm, besonders bevorzugt 0,7 bis 1,2 mm und ganz besonders bevorzugt 0,8 bis 1,2 mm betragen.

8. Kapsel nach Anspruch 1, **dadurch gekennzeichnet, dass** die Pulvermischung des Presslings der Kapsel ein Polysaccharid umfassendes Pulver mit einer ersten mittleren Partikelgröße A und ii) einen Füllstoff mit einer länglichen Form mit einem Aspektverhältnis von größer als 2, bevorzugt von größer als 3, besonders bevorzugt von größer als 5 und höchst bevorzugt von größer als 10 enthält.

9. Kapsel nach Anspruch 8, **dadurch gekennzeichnet, dass** die erste mittlere Partikelgröße A 0,01 bis weniger als 0,5 mm, bevorzugt 0,1 bis 0,4 mm, besonders bevorzugt 0,2 bis 0,4 mm und ganz besonders bevorzugt 0,25 bis 0,35 mm beträgt, und, dass die längste Erstreckung des faserigen Füllstoffs, vorzugsweise inerten Füllstoffs, 0,5 bis 3,0 mm, weiter bevorzugt 0,6 bis 2,4 mm, besonders bevorzugt 0,7 bis 2,4 mm und ganz besonders bevorzugt 0,8 bis 2,4 mm beträgt.

10. Kapsel nach zumindest einem der vorstehenden Ansprüche, **dadurch gekennzeichnet, dass** die Pulvermischung des Presslings mindestens 50 Gew.-% des Polysaccharid umfassenden Pulvers mit der ersten Partikelgröße A und ii) 1 bis 40 Gew.-% des Polysaccharid umfassenden Pulvers mit der zweiten Partikelgröße B und/oder des Füllstoffs mit der Partikelgröße C enthält, bevorzugt mindestens 60 Gew.-% des Polysaccharid umfassenden Pulvers mit der ersten Partikelgröße A und ii) 2 bis 30 Gew.-% des Polysaccharid umfassenden Pulvers mit der zweiten Partikelgröße B und/oder des Füllstoffs mit der Partikelgröße C enthält

**11.** Kapsel nach zumindest einem der vorstehenden Ansprüche, **dadurch gekennzeichnet, dass** das Polysaccharid umfassende Pulver ein Material enthält oder bevorzugt aus einem Material besteht, welches aus der Gruppe ausgewählt ist, welche aus Kaffee, Tee, Trinkschokolade, Kakao, Milchpulver und beliebigen Mischungen aus zwei oder mehr der vorgenannten Materialien besteht, wobei das Polysaccharid umfassende Pulver bevorzugt Kaffee enthält und besonders bevorzugt aus Kaffee besteht.

**12.** Kapsel nach zumindest einem der vorstehenden Ansprüche, **dadurch gekennzeichnet, dass** der Füllstoff ein inertes Material enthält oder bevorzugt aus einem inerten Material besteht, welches bevorzugt aus der Gruppe ausgewählt ist, welche aus Siliziumdioxid, Calciumsilikaten, Cellulose, Methylcellulose, Calciumcarbonat, Titandioxid, Johannisbrotkernmehl, Aluminiumsilikaten und beliebigen Mischungen aus zwei oder mehr der vorgenannten Materialien besteht.

**13.** Verfahren zur Einstellung des Durchströmwiderstandes einer Kapsel, insbesondere zur Zubereitung eines Getränkes aus Getränkepulver, insbesondere von Kaffee aus Kaffeemehl, durch Einbringen von Wasser in die Kapsel, wobei das Verfahren die folgenden Schritte umfasst:

> i) Bereitstellen eines Presslings aus einer Pulvermischung, welche ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff mit einer von der ersten Partikelgröße A verschiedenen oder zu der ersten Partikelgröße A gleichen Partikelgröße C enthält, und
> ii) Ummanteln des Presslings mit einer vernetztes Polysaccharid umfassenden Beschichtungsschicht.

**14.** Verfahren zum Herstellen einer Kapsel nach einem der vorstehenden Ansprüche, welches die folgenden Schritte umfasst:

> i) Bereitstellen eines Presslings aus einer Pulvermischung, welche ein Polysaccharid umfassendes Pulver mit einer ersten Partikelgröße A und ii) a) ein Polysaccharid umfassendes Pulver mit einer von der ersten Partikelgröße A verschiedenen zweiten Partikelgröße B und/oder b) einen Füllstoff mit einer von der ersten Partikelgröße A verschiedenen oder zu der ersten Partikelgröße A gleichen Partikelgröße C enthält,
> ii) in Kontakt bringen wenigstens eines Teils und vorzugsweise der gesamten Oberfläche des in dem Schritt i) erhaltenen Presslings mit einer Lösung eines Polysaccharids in einem Lösungsmittel oder mit einer Dispersion eines Polysaccharids in einem Dispergiermittel,
> iii) ggf. Entnehmen des Presslings aus der Lösung oder der Dispersion des Schritts ii),
> iv) in Kontakt bringen des in dem Schritt ii) oder iii) erhaltenen Presslings mit wenigstens einem Vernetzungsmittel,
> v) ggf. Entnehmen des Presslings aus der Lösung des Schritts iv) und
> vi) Trocknen des in dem Schritt iv) oder v) erhaltenen Presslings.

**15.** Verfahren nach Anspruch 14, **dadurch gekennzeichnet, dass** der Pressling in dem Schritt ii) in eine Alkalimetallalginatlösung, bevorzugt in eine wässrige 0,5 bis 5 gew.-%-ige Alkalimetallalginatlösung und besonders bevorzugt in eine wässrige 0,5 bis 5 gew.-%-ige Natriumalginatlösung eingetaucht oder damit besprüht wird, und, dass der Pressling in dem Schritt iv) in eine Erdalkalimetallsalzlösung, bevorzugt in eine wässrige 1 bis 7 gew.-%-ige Erdalkalimetallsalzlösung und besonders bevorzugt in eine wässrige 1 bis 7 gew.-%-ige Calciumchloridlösung eingetaucht oder damit besprüht wird.

Europäisches
Patentamt

European
Patent Office

Office européen
des brevets

# EUROPÄISCHER RECHERCHENBERICHT

Nummer der Anmeldung

EP 18 15 1614

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 115 316 A1 (NICKEL AXEL [DE]) 11. Januar 2017 (2017-01-11) | 1,14,15 | INV. B65D85/804 |
| Y | * Absatz [0001] - Absatz [0002] * * Absatz [0020] - Absatz [0027]; Ansprüche 1,5-8,11,12-14; Beispiele 1,2 * | 1-15 | A23F3/32 A23F5/12 A23F5/14 A23F5/38 |
| X | US 2005/158426 A1 (HU RUGUO [US] ET AL) 21. Juli 2005 (2005-07-21) | 1-12 | B65D65/46 A23P10/30 |
| Y | * Absatz [0001] * * Absatz [0021] - Absatz [0030] * * Absatz [0038] - Absatz [0045] * | 1-15 | |
| X | US 2016/001968 A1 (KRÜGER MARC [DE] ET AL) 7. Januar 2016 (2016-01-07) * Absatz [0042] - Absatz [0043] * * Absatz [0010] * | 1,2,6,7, 10-13 | |
| X | WO 2014/191412 A1 (K FEE SYSTEM GMBH [DE]) 4. Dezember 2014 (2014-12-04) * Seite 9, Absatz 3; Ansprüche 1,6,10; Abbildung 4 * | 1,2,6, 11-13 | |
| | | | **RECHERCHIERTE SACHGEBIETE (IPC)** |
| A | US 2005/183581 A1 (KIRSCHNER JONATHAN [US] ET AL) 25. August 2005 (2005-08-25) * Absatz [0060] * | 1-15 | B65D A23F A23P |

Der vorliegende Recherchenbericht wurde für alle Patentansprüche erstellt

| Recherchenort | Abschlußdatum der Recherche | Prüfer |
|---|---|---|
| Den Haag | 15. Juni 2018 | Kirchhoff, Eva |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 15 1614

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2018

| Im Recherchenbericht angeführtes Patentdokument | Datum der Veröffentlichung | Mitglied(er) der Patentfamilie | Datum der Veröffentlichung |
|---|---|---|---|
| EP 3115316 A1 | 11-01-2017 | AU 2016290600 A1 | 01-02-2018 |
| | | CA 2991374 A1 | 12-01-2017 |
| | | CN 107921676 A | 17-04-2018 |
| | | EP 3115316 A1 | 11-01-2017 |
| | | KR 20180027573 A | 14-03-2018 |
| | | WO 2017005877 A1 | 12-01-2017 |
| US 2005158426 A1 | 21-07-2005 | KEINE | |
| US 2016001968 A1 | 07-01-2016 | AU 2014222758 A1 | 01-10-2015 |
| | | BR 112015021298 A2 | 18-07-2017 |
| | | CA 2902412 A1 | 04-09-2014 |
| | | CN 105008250 A | 28-10-2015 |
| | | EP 2961671 A1 | 06-01-2016 |
| | | JP 2016511033 A | 14-04-2016 |
| | | KR 20160005009 A | 13-01-2016 |
| | | RU 2015140922 A | 03-04-2017 |
| | | US 2016001968 A1 | 07-01-2016 |
| | | WO 2014131779 A1 | 04-09-2014 |
| WO 2014191412 A1 | 04-12-2014 | AU 2014273150 A1 | 05-11-2015 |
| | | AU 2014273151 A1 | 24-12-2015 |
| | | AU 2016253679 A1 | 24-11-2016 |
| | | BR 112015025545 A2 | 18-07-2017 |
| | | BR 112015029110 A2 | 25-07-2017 |
| | | CA 2908179 A1 | 04-12-2014 |
| | | CA 2913597 A1 | 04-12-2014 |
| | | CA 2992749 A1 | 04-12-2014 |
| | | CA 2992757 A1 | 04-12-2014 |
| | | CN 105102348 A | 25-11-2015 |
| | | CN 105246798 A | 13-01-2016 |
| | | DE 202014010993 U1 | 20-03-2017 |
| | | DO P2015000260 A | 30-11-2015 |
| | | DO P2015000283 A | 15-01-2016 |
| | | EP 3003908 A1 | 13-04-2016 |
| | | EP 3003909 A1 | 13-04-2016 |
| | | HK 1222155 A1 | 23-06-2017 |
| | | HK 1222156 A1 | 23-06-2017 |
| | | JP 2016521153 A | 21-07-2016 |
| | | JP 2016525911 A | 01-09-2016 |
| | | JP 2017213395 A | 07-12-2017 |
| | | KR 20160012228 A | 02-02-2016 |
| | | KR 20160012229 A | 02-02-2016 |
| | | NZ 712982 A | 27-01-2017 |
| | | NZ 714915 A | 24-02-2017 |
| | | NZ 724768 A | 23-03-2018 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT**
**ÜBER DIE EUROPÄISCHE PATENTANMELDUNG NR.**                    EP 18 15 1614

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2018

| Im Recherchenbericht angeführtes Patentdokument | Datum der Veröffentlichung | Mitglied(er) der Patentfamilie | Datum der Veröffentlichung |
|---|---|---|---|
| | | PH 12015502198 A1 | 25-01-2016 |
| | | PH 12015502620 A1 | 07-03-2016 |
| | | RU 2015156398 A | 04-07-2017 |
| | | RU 2015156399 A | 04-07-2017 |
| | | SG 11201508578R A | 27-11-2015 |
| | | SG 11201509491S A | 30-12-2015 |
| | | US 2016060023 A1 | 03-03-2016 |
| | | US 2016122122 A1 | 05-05-2016 |
| | | WO 2014191412 A1 | 04-12-2014 |
| | | WO 2014191413 A1 | 04-12-2014 |
| | | ZA 201508008 B | 25-01-2017 |
| | | ZA 201509148 B | 30-08-2017 |
| US 2005183581 A1 | 25-08-2005 | AR 056334 A1 | 03-10-2007 |
| | | AT 432230 T | 15-06-2009 |
| | | BR PI0608921 A2 | 03-11-2010 |
| | | CN 101171184 A | 30-04-2008 |
| | | CN 101933766 A | 05-01-2011 |
| | | DK 1883587 T3 | 07-09-2009 |
| | | EP 1883587 A2 | 06-02-2008 |
| | | JP 5015914 B2 | 05-09-2012 |
| | | JP 2008539947 A | 20-11-2008 |
| | | US 2005183581 A1 | 25-08-2005 |
| | | WO 2006121520 A2 | 16-11-2006 |
| | | ZA 200709049 B | 29-10-2008 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014000187 A1
- DE 3115316 A1